(19) **Europäisches Patentamt**

**European Patent Office**

**Office européen des brevets**

(11) **EP 0 836 765 B1**

(12) **EUROPÄISCHE PATENTSCHRIFT**

(45) Veröffentlichungstag und Bekanntmachung des Hinweises auf die Patenterteilung:
**24.01.2001 Patentblatt 2001/04**

(51) Int Cl.$^7$: **H02P 21/00**

(21) Anmeldenummer: **96918605.5**

(86) Internationale Anmeldenummer:
**PCT/DE96/01111**

(22) Anmeldetag: **24.06.1996**

(87) Internationale Veröffentlichungsnummer:
**WO 97/02651 (23.01.1997 Gazette 1997/05)**

(54) **VERFAHREN ZUR GEBERLOSEN FELDORIENTIERTEN REGELUNG EINER ASYNCHRONMASCHINE**

SENSORLESS FIELD-ORIENTATION CONTROL OF AN INDUCTION MOTOR

PROCEDE DE REGULATION SANS CAPTEURS D'UN MOTEUR ASYNCHRONE AU MOYEN D'UN CHAMP D'ORIENTATION

(84) Benannte Vertragsstaaten:
**DE FR GB IT**

(30) Priorität: **06.07.1995 DE 19524654**

(43) Veröffentlichungstag der Anmeldung:
**22.04.1998 Patentblatt 1998/17**

(73) Patentinhaber: **SIEMENS AKTIENGESELLSCHAFT**
**80333 München (DE)**

(72) Erfinder: **KLAASSEN, Norbert**
**D-91054 Erlangen (DE)**

(56) Entgegenhaltungen:
**EP-A- 0 598 921**

- **ISLAM S M ET AL: "FOUR QUADRANT ROBUST QUICK RESPONSE OPTIMALLY EFFICIENT INVERTER FED INDUCTION MOTOR DRIVE" 14.August 1989 , PROCEEDINGS OF THE MIDWEST SYMPOSIUM ON CIRCUITS AND SYSTEMS, CHAMPAIGN, AUG. 14 - 16, 1989, VOL. VOL. 2, NR. SYMP. 32, PAGE(S) 766 - 770 , INSTITUTE OF ELECTRICAL AND ELECTRONICS ENGINEERS XP000139765 siehe Seite 766, rechte Spalte**
- **LINK U ET AL: "DREHZAHLREGELUNG UM NULL" 21.August 1992 , ELEKTROTECHNIK, VOL. 74, NR. 7 / 08, PAGE(S) 24 - 25, 28, 30 - 31 XP000309951 siehe Seite 28, rechte Spalte - Seite 30, mittlere Spalte**

**Beschreibung**

Die Erfindung bezieht sich auf ein Verfahren zur geberlosen feldorientierten Regelung einer Asynchronmaschine, wobei Schätzwerte eines Orientierungswinkels, einer Läuferdrehzahl und eines Ständerwiderstandes, die bei der feldorientierten Regelung benötigt werden, mittels eines als Maschinenmodell verwendeten MRAS geschätzt werden.

Das natürliche Koordinatensystem der Asynchronmaschine ist das ständerfeste Koordinatensystem. Bei der feldorientierten Regelung werden die Zustandsgrößen der Asynchronmaschine im läuferflußfesten, feldorientierten Koordinatensystem berechnet. Deshalb müssen die Klemmengrößen der Asynchronmaschine vor der Verwendung in der Regelung zunächst ins Läuferfluß-Koordinatensystem transformiert werden. Der Transformationswinkel bzw. Orientierungswinkel (Lage des Läuferflusses bezogen auf das ständerfeste Koordinatensystem) kann nur mit großem Aufwand gemessen werden. Er wird deshalb in der Regel mit einem Maschinenmodell geschätzt.

Bei Ständerfrequenz Null ist ein feldorientierter Betrieb der Asynchronmaschine prinzipiell nicht möglich, weil die Asynchronmaschine und folglich auch die Läuferflußlage in diesem Betriebspunkt nicht beobachtbar ist, Zudem wirkt sich eine Fehlanpassung zwischen den im Maschinenmodell und in der Regelung verwendeten Werten für die Parameter der Asynchronmaschine und den echten Werten vor allem bei kleinen Frequenzen stark aus. Eine solche Fehlanpassung führt bei Frequenzen nahe Null zu einer deutlichen Abweichung der geschätzten von den tatsächlichen Zustandsgrößen der Maschine und bewirkt so eine Fehlorientierung der Regelung. Besonders ungünstig wirkt sich ein falsch eingestellter Ständerwiderstand der Asynchronmaschine aus.

Der Aufsatz "Speed Estimation and Sensorless Control of AC Drives" von Joachim Holtz, abgedruckt in IEEE, 1993, Seiten 649 bis 654, gibt eine Übersicht über bekannte Verfahren zum geberlosen Betrieb der Asynchronmaschine. In dem Aufsatz "Vector Control of Induction Motor without Shaft Encoder", abgedruckt in IEEE Trans. on Ind. Appl., Vol. 28, No. 1, Jan./Febr. 1992, Seiten 157 bis 164, wird eine Vektorregelung einer Asynchronmaschine vorgestellt, deren Rotorflußschätzer die Reduzierung der Ständerwiderstandsbeeinflussung verbessert und die Schätzung des Flußwertes bei Stillstand ermöglichen soll. Im Aufsatz "Speed Sensorless Field-Orientation Control of Induction Machine", abgedruckt in IEEE Trans. on Ind. Appl., Vol. 29, No. 1, Jan./Febr. 1993, Seiten 175 bis 180, ist ein Verfahren zur geberlosen feldorientierten Regelung einer Asynchronmaschine angegeben. Bei diesem Verfahren wird die Rotordrehzahl mittels zweier Flußsimulatoren geschätzt.

Eine weitere Möglichkeit zum geberlosen Betrieb ist im Aufsatz "Adaptive-Speed Identification Scheme for a Vector-Controlled Speed Sensorless Inverter-Induction Motor Drive", abgedruckt in IEEE Transactions on Industry Applications, Vol. 29, No. 4, July/August 1993, Seiten 820 bis 825, dargestellt. In diesem Aufsatz wird mit Hilfe eines Model Reference Adaptive System (MRAS) eine Schätzung sowohl der Drehzahl als auch des Ständerwiderstandes der Asynchronmaschine vorgenommen.

Ein solches MRAS besteht aus drei Teilen:

1. Modell der Maschine
2 . Beobachter-Rückkopplungen
3. Zwei Adaptionsgleichungen für die Drehzahl und den Ständerwiderstand.

Die Beobachter-Rückkopplungen und die Adaptionsvorschriften müssen so gewählt werden, daß der geschlossene Adaptionskreis stabil ist. Das heißt, es muß sichergestellt sein, daß sich die Zustände des Modells und die Parameterschätzwerte (Schätzwert für Drehzahl und Ständerwiderstand) den echten Werten in der Maschine annähern. Hierfür gibt es verschiedene Verfahren. Ein mögliches Verfahren ist der Entwurf mit einem Lyapunov-Ansatz, wie er im Aufsatz "DSP-Based Speed Adaptive Flux Observer of Induction Motor", abgedruckt in IEEE Transactions on Industry Applications, Vol. 29, No. 2, March/April 1993, Seiten 344 bis 348, beschrieben ist. Eine andere Methode ist der Entwurf mit Hilfe der Popov'schen Hyperstabilitätstheorie. Dieser Ansatz wird im bereits erwähnten Aufsatz "Adaptive-Speed Identification Scheme of a Vector-Controlled Speed Sensorless Inverter-Induction Motor Drive" gewählt. Mit diesem Verfahren können unterschiedliche Klassen von Adaptionsvorschriften hergeleitet werden. Alle haben aber gemeinsam, daß für jeden zu adaptierenden Parameter eine verallgemeinerte Regeldifferenz gebildet wird, die von einem Adaptionsregler ausgeregelt wird. Ausgang des Reglers ist der aktuelle Wert des Parameters. Man kann fünf verschiedene Adaptionsvorschriften unterscheiden:

1. Integrale Adaption (I-Regler)
2. Proportionale und integrale Adaption (PI-Regler) (im bereits genannten Aufsatz "Adaptive-Speed Identification Scheme of a Vector-Controlled Speed Sensorless Inverter-Induction Motor Drive" hergeleitet und im bereits genannten Aufsatz "DSP-Based Speed Adaptive Flux Observer of Induction Motor" ohne Herleitung als Verbesserung gegenüber dem integralen Verfahren verwendet).
3. Proportionale Adaption (P-Regler)

4. Proportionale und integrale und differentielle Adaption (PID-Regler)

5. Relais-Adaption (schaltender Regler)

Im Fall des MRAS für die Asynchronmaschine ergeben sich folgende verallgemeinerte Regelabweichungen:

Regler zur Bestimmung des Schätzwertes für die Drehzahl $\omega_m$:

$$e_{\omega_m} = \sigma L_1 (\Delta i_\alpha \hat{\Psi}_\beta - \Delta i_\beta \hat{\Psi}_\alpha)$$

Diese Regelabweichung ist ein Maß für die Abweichung des inneren Momentes in der Maschine vom geschätzten inneren Moment, das im Maschinenmodell gebildet wird. Der Adaptionsregler für $\omega_m$ verändert den Drehzahlschätzwert also so lange, bis die inneren Momente in Maschine und Modell übereinstimmen. Dies funktioniert allerdings nur, wenn die Läuferflüsse in Maschine und Modell übereinstimmen.

Bei der Herleitung der Regelabweichung für die Drehzahl $\omega_m$ ergibt sich noch der zusätzliche Term

$$\frac{L_H}{L_2}(\Delta \Psi_\beta \hat{\Psi}_\alpha - \Delta \Psi_\alpha \hat{\Psi}_\beta) \, ,$$

der den Läuferflußistwert enthält und sicherstellt, daß die Läuferflüsse in Maschine und Modell tatsächlich übereinstimmen oder sich zumindest einander annähern. Weil es aber keinen Meßwert für den Läuferfluß gibt, kann dieser zusätzliche Term nicht berechnet werden. Deshalb ist der Betriebsbereich des MRAS eingeschränkt.

Regler zur Bestimmung des Schätzwertes für den Ständerwiderstand $R_1$ :

$$e_{R_1} = -\sigma L_1 (\hat{\imath}_\alpha \Delta i_\alpha + \hat{\imath}_\beta \Delta i_\beta)$$

Diese Regelabweichung ist ein Maß für die Abweichung des Betrages des Ständerstroms in der Maschine vom Betrag des geschätzten Ständerstromes, den man dem Maschinenmodell entnimmt. Der Adaptionsregler für den Ständerwiderstand $R_1$ verändert den Widerstandsschätzwert also so lange, bis die Beträge des gemessenen und des geschätzten Ständerstromes übereinstimmen.

Das beschriebene MRAS ist wegen des fehlenden Terms in der Regelabweichung zur Bestimmung des Drehzahlschätzwertes $\omega_m$ nicht in allen Betriebsbereichen der Asynchronmaschine anwendbar. Uneingeschränkt ist dieses MRAS nur bei motorischem Betrieb der Asynchronmaschine einsetzbar.

Der Erfindung liegt nun die Aufgabe zugrunde, das Model Reference Adaptive System (MRAS) derart weiterzubilden, daß auch im generatorischen Betrieb der Asynchronmaschine eine Schätzung der Drehzahl möglich ist.

Diese Aufgabe wird erfindungsgemäß gelöst mit den kennzeichnenden Merkmalen des Anspruchs 1.

Dadurch, daß man den generatorischen Betrieb der Asynchronmaschine in zwei Bereiche unterteilt, wobei im generatorischen Bereich hoher Drehzahl die bekannte Berechnung des Schätzwertes der Drehzahl aufrechterhalten werden kann und wobei im generatorischen Bereich niedriger Drehzahl der Schätzwert der Drehzahl in Abhängigkeit der mechanischen Bewegungsgleichung mit konstantem geschätzten Lastmoment berechnet wird, kann das vollständige Maschinenmodell MRAS auch im generatorischen Bereich der Asynchronmaschine eingesetzt werden. Im generatorischen Bereich hoher Drehzahl ist auf diese Weise ein feldorientierter Betrieb der Asynchronmaschine uneingeschränkt möglich. Auch im generatorischen Bereich niedriger Drehzahl kann so eine Quasi-Feldorientierung aufrechterhalten werden, solange das Lastmoment konstant bleibt. Da der Orientierungswinkel in diesem Betriebsbereich nur von den Stromschätzwerten und dem konstanten geschätzten Lastmoment abhängt, handelt es sich hier um eine Art Frequenzsteuerung. Allerdings bleibt die Beobachterrückführungen und damit eine Verbindung zu den Stromistwerten der Maschine erhalten. Durch die Lastmomentschätzung ist der Übergang vom generatorischen Bereich hoher Drehzahl zum generatorischen Bereich niedriger Drehzahl transientenfrei. Auch in diesem generatorischen Bereich niedriger Drehzahl hat die Regelung mit dem vollständigen Maschinenmodell MRAS Vorteile. Aufgrund der Beobachterstruktur sind die Reaktionen des Antriebs auf Lastmomentsprünge sehr gut gedämpft.

Bei einem vorteilhaften Verfahren wird im generatorischen Bereich der Asynchronmaschine ausgehend von hohen Drehzahlen mit sinkender Drehzahl der Sollwert für die magnetisierende Stromkomponente drehzahlabhängig angehoben. Die Charakteristik dieser Anhebung hängt von den Motorparametern ab und davon, welches maximale Lastmoment im generatorischen Betrieb auftreten kann. Die Anhebung muß bei kleinsten Drehzahlen so groß sein, daß ein maximales zu erwartendes Lastmoment von der Maschine getragen werden kann. Mit wachsender Drehzahl kann die Anhebung reduziert werden.

Bei einem weiteren vorteilhaften Verfahren wird die Drehzahlgrenze im generatorischen Betrieb der Asynchronmaschine in Abhängigkeit des zu erwartenden Lastmoment bzw. Wirkstrom und einer Maschinenkonstanten berechnet. Dadurch verbessert sich die Schätzung der Drehzahl, da zu jedem Zeitpunkt die richtige Adaptionsgleichung für die Läuferdrehzahl der Asynchronmaschine verwendet werden kann, wodurch der feldorientierte Bereich (generatorischer Bereich hoher Drehzahl) voll ausgenutzt werden kann.

Bei einem weiteren vorteilhaften Verfahren wird im generatorischen Betrieb der Asynchronmaschine der festgehaltene aktuelle Schätzwert des Ständerwiderstandes mittels eines Temperaturmodells für den Ständerwiderstand nachgeführt. Auf diese Weise ist über längere Zeit ein feldorientierter Betrieb auch bei Drehzahl Null möglich. Eine Umschaltung zur Frequenzsteuerung muß dennoch zeitgesteuert erfolgen, weil die Übereinstimmung zwischen Temperaturmodell und Maschine allmählich schlechter wird.

Bei einem weiteren vorteilhaften Verfahren wird der aktuelle Schätzwert des Ständerwiderstandes mit Auftreten eines Bremsbefehls festgehalten. Bei vielen Antrieben kann generatorischer Betrieb nur dann auftreten, wenn der Motor abgebremst wird. Da die Absicht des Bremsens in der Regelung frühzeitig bekannt ist, kann die Ständerwiderstandsadaption auf jeden Fall vor Eintritt in den generatorischen Betrieb gesperrt werden. Eine Verschlechterung des geschätzten Widerstandswertes durch eine möglicherweise zu späte Erkennung des Überganges ist dann ausgeschlossen. Unter der Voraussetzung, daß sich der Ständerwiderstand während der (kurzen) Bremsdauer nicht nennenswert ändert, ist so bis Drehzahl Null ein feldorientierter Betrieb möglich.

Bei einem weiteren vorteilhaften Verfahren wird der Schätzwert des Lastmomentes mittels einer Lastmomentkennlinie bestimmt. Bei einigen Antrieben (z.B. Strömungsantriebe) ist das Lastmoment drehzahlabhängig und kann seine Richtung beim Drehzahlnulldurchgang ändern. Eine Berücksichtigung eines solchen Verhaltens mittels einer Lastmomentkennlinie bringt hier eine wesentliche Verbesserung des Regelverfahrens im frequenzgesteuerten Betrieb.

Bei einem weiteren vorteilhaften Verfahren verläuft die Ablösung zwischen den beiden Berechnungen des Schätzwertes für die Läuferdrehzahl im generatorischen Betrieb der Asynchronmaschine kontinuierlich. Dadurch wird ein sanfter Übergang zwischen Feldorientierung und Frequenzsteuerung erreicht. Dies kann dadurch realisiert werden, daß die Verstärkung des Integralreglers für den Schätzwert der Drehzahl schon vor Erreichen der Mindestdrehzahl für feldorientierten Betrieb auf Null geführt wird. Umgekehrt sollte sie nach Überschreiten der Mindestdrehzahl nur allmählich vergrößert werden.

Zur weiteren Erläuterung wird auf die Zeichnung Bezug genommen, in der ein Ausführungsbeispiel einer geberlosen feldorientierten Regelung einer Asynchronmaschine schematisch dargestellt ist.

| Figur 1 | zeigt ein Blockschaltbild einer geberlosen feldorientierten Regelung einer Asynchronmaschine mit einem Model Reference Adaptive System, in den |
| Figuren 2 bis 5 | ist ein Regelvorgang dargestellt, bei dem alle drei Betriebsbereiche durchfahren werden, wobei die |
| Figur 2 | in einem Diagramm über der Zeit t die Drehzahl, die |
| Figur 3 | in einem Diagramm über der Zeit t die magnetisierende Stromkomponente, die |
| Figur 4 | in einem Diagramm über der Zeit t die momentenbildende Stromkomponente, die |
| Figur 5 | in einem Diagramm über der Zeit t die Ständerwiderstand-Adaption zeigt und die |
| Figur 6 | zeigt in einem Diagramm die Bereichsgrenzen dieses Regelverfahrens im generatorischen Bereich. |

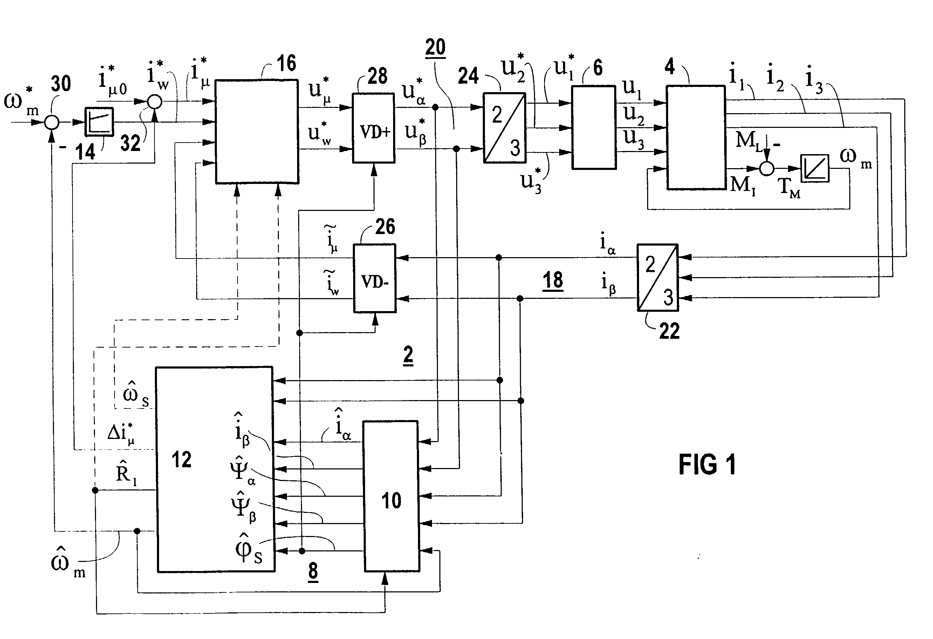

In Figur 1 ist ein Blockschaltbild einer geberlosen feldorientierten Regelung 2 einer Asynchronmaschine 4 dargestellt, die von einem Umrichter 6 gespeist wird. Diese Regelung 2 weist als vollständiges Maschinenmodell ein Model Reference Adaptive System (MRAS) 8 auf, das aus einem Beobachter 10 und einer betriebspunktabhängigen Adaption 12 besteht, wobei diese Adaption 12 auf den Beobachter 10 zurückgekoppelt ist. Außerdem weist diese Regelung 2 einen Drehzahlregler 14, eine Einrichtung 16 und zwei Transformationseinrichtungen 18 und 20 auf.

Die Transformationseinrichtung 18 bzw. 20 besteht aus einem Koordinatenwandler 22 bzw. 24 und einem Vektordreher 26 bzw. 28, wobei der Vektordreher 26 bzw. 28 mit einem Ausgang des Beobachters 10 des MRAS 8 verknüpft ist, an dem ein Orientierungswinkel $\hat{\varphi}_S$ ansteht. Mit der einen Transformationseinrichtung 18 werden die gemessenen Ströme $i_1$, $i_2$, $i_3$ der Asynchronmaschine 4 in feldorientierte Stromkomponenten, nämlich eine magnetisierende Stromkomponente $\tilde{i}_\mu$ und eine momentenbildende Stromkomponente $\tilde{i}_w$, transformiert. Mit der Transformationseinrichtung 20 werden die feldorientierten Komponenten $u_\mu^*$ und $u_w^*$ der Stellgröße $u^*$ in ständerorientierte Komponenten $u_1^*$, $u_2^*$, $u_3^*$ transformiert, die dem Umrichter 6 zugeführt werden.

Die Einrichtung 16 umfaßt je einen Stromregler für die magnetisierende und die momentenbildende Stromkomponente $i_\mu$ und $i_W$, eine Vorsteuerung und ein Entkoppelnetzwerk. An den Ausgängen dieser Einrichtung 16 stehen die feldorientierten Komponenten $u_\mu^*$ und $u_w^*$ der Stellgröße $u^*$ des Umrichters 6 an. Eine derartige Einrichtung 16 ist beispielsweise aus dem Aufsatz "Field Oriented Control in Modern Drive Technology", abgedruckt in AISE A-C-Drive Seminar, Pittsburgh, 1993, Seiten 1 bis 9, bekannt. Dieser Einrichtung 16 sind die Sollwerte der feldorientierten Stromkomponenten $i_\mu^*$ und $i_w^*$, die transformierten Stromkomponenten-Istwerte $\tilde{i}_\mu$ und $\tilde{i}_w$ und jeweils ein Schätzwert $\hat{R}_1$ und

$\hat{\omega}_S$ des Ständerwiderstandes $R_1$ und der Ständerkreisfrequenz $\omega_S$ der Asynchronmaschine 4 übertragen, wobei diese Schätzwerte vom MRAS 8 berechnet werden. Die momentenbildende Stromkomponente $i_w^*$ wird vom Drehzahlregler 14 generiert, der eingangsseitig mit einem Vergleicher 30 verknüpft ist, an dessen nicht invertierenden Eingang ein Drehzahl-Sollwert $\hat{\omega}_m$ und am invertierenden Eingang ein Schätzwert $\hat{\omega}_m$ der Läuferdrehzahl $\omega_m$ anstehen. Die magnetisierende Stromkomponente $i_\mu^*$ ergibt sich mittels eines Addierers 32 aus einer Nennmagnetisierungs-Stromkomponente $i_{\mu 0}$ und einer Zusatzstromkomponente $\Delta i_\mu^*$, die vom MRAS 8 geliefert wird.

Die in der Stromregelung verwendeten Istwerte des magnetisierenden und des momentenbildenden Stromes $\tilde{i}_\mu$, $\tilde{i}_w$ entstehen aus den Stromistwerten $i_\alpha$ und $i_\beta$ durch Drehung mit dem geschätzten Winkel $\varphi_S$. Tatsächlich handelt es sich also um Schätzwerte für die in der Maschine 4 vorliegenden Stromkomponenten $i_\mu$ und $i_w$. Sie sind deshalb mit einer Wellenlinie gekennzeichnet. Das Model Reference Adaptive System 8 liefert ebenfalls Schätzwerte, die im folgenden mit einem Dach gekennzeichnet sind. Will man das vollständige Maschinenmodell zur Bestimmung des Transformationswinkels $\varphi_S$ verwenden, so muß der Drehzahlistwert oder ein Schätzwert für die Drehzahl bereitgestellt werden. Bei einer geberlosen Regelung einer Asynchronmaschine steht der Drehzahlistwert nicht zur Verfügung. Ein Schätzwert für die Drehzahl kann beschafft werden, indem man das Modell des elektrischen Teils der Maschine durch eine Adaptionsgleichung erweitert. Man erhält so ein MRAS 8 für die Drehzahl $\omega_m$. Mit einer zusätzlichen Adaptionsgleichung kann man auch den Ständerwiderstand $R_1$ einschätzen.

Die Adaptionsgleichungen für $\omega_m$ und $R_1$ können aus der Zustandsdarstellung der Asynchronmaschine 4 abgeleitet werden. Die Maschine wird dabei als Referenz (mit festen Parametern) für das parameterverstellbare Modell der Maschine aufgefaßt.

Die Zustandsgleichung des Beobachters (in Ständerkoordinaten) lautet:

$$\hat{\dot{x}} = \hat{A}\hat{x} + \hat{B}u + Ge$$

$$\hat{A} = \begin{pmatrix} -\dfrac{1}{\sigma L_1}\left(\hat{R}_1 + R_2 \dfrac{L_H^2}{L_2^2}\right) & 0 & \dfrac{R_2 L_H}{\sigma L_1 L_2^2} & \hat{\omega}_m \dfrac{L_H}{\sigma L_1 L_2} \\ 0 & -\dfrac{1}{\sigma L_1}\left(\hat{R}_1 + R_2 \dfrac{L_H^2}{L_2^2}\right) & -\hat{\omega}_m \dfrac{L_H}{\sigma L_1 L_2} & \dfrac{R_2 L_H}{\sigma L_1 L_2^2} \\ \dfrac{R_2 L_H}{L_2} & 0 & -\dfrac{R_2}{L_2} & -\hat{\omega}_m \\ 0 & \dfrac{R_2 L_H}{L_2} & \hat{\omega}_m & -\dfrac{R_2}{L_2} \end{pmatrix} , \quad \hat{B} = \begin{pmatrix} \dfrac{1}{\sigma L_1} & 0 \\ 0 & \dfrac{1}{\sigma L_1} \\ 0 & 0 \\ 0 & 0 \end{pmatrix} ,$$

$$G = \begin{pmatrix} g_{11} & g_{12} \\ -g_{12} & g_{11} \\ g_{31} & g_{32} \\ -g_{32} & g_{31} \end{pmatrix} , \quad u = \begin{pmatrix} u_\alpha \\ u_\beta \end{pmatrix} , \quad \hat{x} = \begin{pmatrix} \hat{i}_\alpha \\ \hat{i}_\beta \\ \hat{\Psi}_\alpha \\ \hat{\Psi}_\beta \end{pmatrix} , \quad e = \begin{pmatrix} i_\alpha \\ i_\beta \end{pmatrix} - \begin{pmatrix} \hat{i}_\alpha \\ \hat{i}_\beta \end{pmatrix} = \begin{pmatrix} \Delta i_\alpha \\ \Delta i_\beta \end{pmatrix}$$

Dieser Asynchronmotor-Beobachter 10 entspricht dem im bereits genannten Aufsatz "Adaptive-Speed Identification Scheme for a Vector-Controlled Speed Sensorless Inverter-Induction Motor Drive" oder dem im Aufsatz "DSP-Based Speed Adaptive Flux Observer of Induction Motor" angegebenen. In einem vorteilhaften Verfahren ist dem Maschinenmodell eine Sättigungskennlinie für den Hauptfluß implementiert. Zusätzliche Erweiterungen durch die Berücksichtigung weiterer nichtlinearer Effekte in der Asynchronmaschine 4 sind möglich.

Die Koeffizienten der Beobachter-Rückführung G berechnen sich aus:

$$g_{11} \geq \frac{\omega_{m_{MAX}}^2}{4} \frac{L_2}{R_2} - \frac{1}{\sigma L_1}\left(R_{1_{MAX}} + R_2 \frac{L_H^2}{L_2^2}\right)$$

$$g_{31} = \frac{R_2}{L_2}\left(L_H + \sigma L_1 \frac{L_2}{L_H}\right)$$

$$g_{32} = 0$$

$$g_{12} = -c_{12}\frac{\hat{\omega}_m}{1\%} \qquad |\hat{\omega}_m| \leq 1\%$$

$$g_{12} = -C_{12}\operatorname{sgn}(\hat{\omega}_m) \qquad |\hat{\omega}_m| > 1\%, (c_{12} > 0)$$

Diese Wahl der Beobachterrückführungen stellt sicher, daß der geschlossene Adaptionskreis stabil ist. Eine andere Wahl der gij (wie z.B. in "DSP-Based Speed Adaptive Flux Observer of Induction Motor") ist möglich.

Der Orientierungswinkel $\hat{\varphi}_S$ ist der Winkel des geschätzten Läuferflusses und wird wie folgt berechnet:

$$\hat{\varphi}_S = \arg(\hat{\Psi}_\alpha + j\hat{\Psi}_\beta)$$

In der betriebspunktabhängigen Adaption 12 werden die grundlegenden Adaptionsgleichungen gerechnet und die Umschaltungen zwischen motorischem Betrieb und generatorischem Betrieb bei kleiner und großer Drehzahl durchgeführt.

Schätzwerte für die Schlupffrequenz $\omega_R$ und die Frequenz des Läuferflusses $\omega_S$ erhält man aus:

$$\hat{\omega}_R = \frac{R_2 L_H}{L_2}\frac{\hat{i}_w}{\hat{\Psi}} \quad \text{mit} \quad \hat{\Psi} = \left|\hat{\Psi}_\alpha + j\hat{\Psi}_\beta\right| \quad \text{und} \quad \hat{i}_w = \operatorname{Im}\left\{(\hat{i}_\alpha + j\hat{i}_\beta)e^{-j\hat{\varphi}_S}\right\}$$

$$\hat{\omega}_S = \hat{\omega}_m + \hat{\omega}_R$$

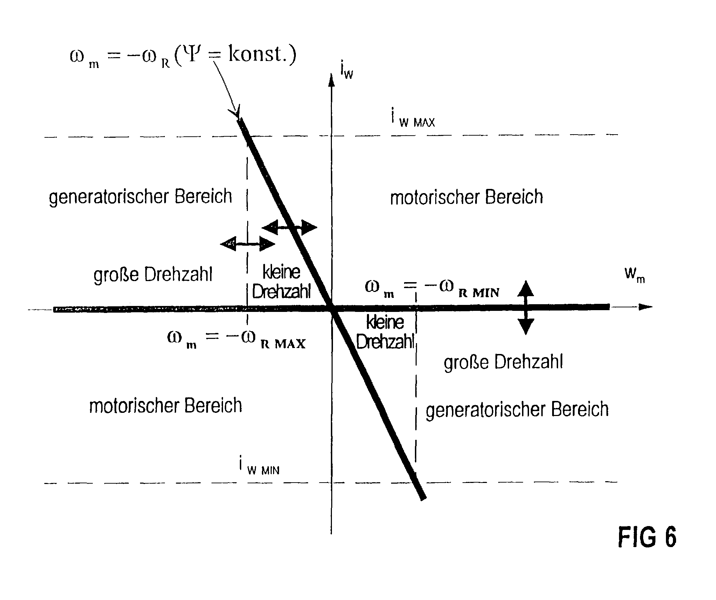

Die Bestimmung von Schätzwerten für den Ständerwiderstand $R_1$ und die Drehzahl $\omega_m$ erfolgt betriebspunktabhängig. Die Figur 6 verdeutlicht den Verlauf der Bereichsgrenzen.

Motorischer Bereich

$$\{\omega_S * M_I > 0\} \Leftrightarrow \left\{\left[(\omega_m > -\omega_R) \wedge (i_w > 0)\right] \vee \left[(\omega_m < -\omega_R) \wedge (i_w < 0)\right]\right\} :$$

Die Adaptionsgleichungen für den Ständerwiderstand $R_1$ und die Drehzahl $\omega_m$ werden gerechnet:

$$\hat{\omega}_m = \hat{\omega}_m(0) + \lambda_1 \sigma L_1 \int_0^t \left(\Delta i_\alpha \hat{\Psi}_\beta - \Delta i_\beta \hat{\Psi}_\alpha\right) d\tau$$

$$\hat{R}_1 = \hat{R}_1(0) - \lambda_2 \sigma L_1 \int_0^t \left(\hat{i}_\alpha \Delta i_\alpha + \hat{i}_\beta \Delta i_\beta\right) d\tau$$

Diese Adaptionsgleichungen enthalten nur einen Integralanteil. Eine Erweiterung durch einen Proportionalanteil ist möglich. Auch andere Adaptionsvorschriften können mit Hilfe der Hyperstabilitätstheorie hergeleitet werden.

Generatorischer Bereich

$$\left\{\omega_S * M_I < 0\right\} \Leftrightarrow \left\{\left[\left(\omega_m < -\omega_R\right) \wedge \left(i_w > 0\right)\right] \vee \left[\left(\omega_m > -\omega_R\right) \wedge \left(i_w < 0\right)\right]\right\} :$$

Die Adaptionsgleichung für den Ständerwiderstand $R_1$ wird im generatorischen Bereich nicht gerechnet. Beim Eintritt in den generatorischen Bereich wird der aktuelle Schätzwert $R_1$ des Ständerwiderstandes $R_1$ festgehalten (der Adaptionsregler für den Ständerwiderstand $R_1$ wird angehalten).

Vorteilhafterweise wird der Blindstrom-Sollwert $i_\mu^*$ angehoben. Die Charakteristik dieser Anhebung hängt von den Motorparametern ab und davon, welches maximale Lastmoment im generatorischen Betrieb auftreten kann.

Die Art der Bestimmung des Schätzwertes $\omega_m$ für die Drehzahl $\omega_m$ hängt von der Höhe der Drehzahl ab. Die Drehzahlgrenzen wiederum ergeben sich aus dem zu erwartenden maximalen Lastmoment bzw. Wirkstrom im generatorischen Betrieb. Die Drehzahlgrenzen $\omega_{RMAX}$ und $\omega_{RMIN}$ werden gemäß folgender Gleichungen berechnet:

$$\omega_{R_{MAX}} = \frac{R_2 L_H}{L_2} \frac{i_{W_{MAX}}}{\Psi},$$

$$\omega_{R_{MIN}} = \frac{R_2 L_H}{L_2} \frac{i_{W_{MIN}}}{\Psi}$$

Große Drehzahl (Figur 6)

$$\left\{\left[\left(\omega_m < -\omega_{R_{MAX}}\right) \wedge \left(i_w > 0\right)\right] \vee \left[\left(\omega_m > -\omega_{R_{MIN}}\right) \wedge \left(i_w < 0\right)\right]\right\} :$$

Die Adaptionsgleichung für die Drehzahl $\omega_m$ wird gerechnet

$$\hat{\omega}_m = \hat{\omega}_m(0) + \lambda_1 \sigma L_1 \int_0^t \left(\Delta i_\alpha \hat{\Psi}_\beta - \Delta i_\beta \hat{\Psi}_\alpha\right) d\tau$$

Kleine Drehzahl (Figur 6)

$$\left\{\left[\left(-\omega_{R_{MAX}} < \omega_m < -\omega_R\right) \wedge \left(i_w > 0\right)\right] \vee \left[\left(-\omega_R < \omega_m < -\omega_{R_{MIN}}\right) \wedge \left(i_w < 0\right)\right]\right\} :$$

Die Adaptionsgleichung für die Drehzahl $\omega_m$ wird nicht gerechnet, weil im Bereich generatorisch kleiner Drehzahl eine Bestimmung von $\omega_m$ mit Hilfe dieser Gleichung nicht mehr zuverlässig möglich ist. Tatsächlich kann sich die Drehzahl der Asynchronmaschine 4 aber auch in diesem Bereich weiter ändern, man kann also nicht einfach den Schätzwert für die Drehzahl festhalten, wie dies bei dem Schätzwert für den Ständerwiderstand möglich ist.

Die Drehzahl der Asynchronmaschine 4 ändert sich gemäß der bekannten mechanischen Bewegungsgleichung:

$$\omega_{\mathrm{m}} = \omega_{\mathrm{m}}(0) + \frac{z_{\mathrm{p}}}{\Theta_{\mathrm{M}}} \int_{0}^{t} \left( M_{\mathrm{I}} - M_{\mathrm{L}} \right) d\tau \ .$$

Deshalb wird diese Gleichung dazu hergenommen, um im Bereich generatorisch kleiner Drehzahl einen Drehzahlschätzwert $\hat{\omega}_{m}$ zu bestimmen. Die Gleichung zur Schätzung der Drehzahl lautet also jetzt:

$$\hat{\omega}_{\mathrm{m}} = \hat{\omega}_{\mathrm{m}}(0) + \frac{z_{\mathrm{p}}}{\Theta_{\mathrm{M}}} \int_{0}^{t} \left( \hat{M}_{\mathrm{I}} - \hat{M}_{\mathrm{L}} \right) d\tau, \quad \text{mit} \quad \hat{M}_{\mathrm{I}} = \frac{3z_{\mathrm{p}}}{2} \frac{L_{\mathrm{H}}}{L_{2}} \left( \hat{\Psi}_{\alpha} \hat{i}_{\beta} - \hat{\Psi}_{\beta} \hat{i}_{\alpha} \right)$$

Nun braucht man aber für das Lastmoment einen Schätzwert. Diesen kann man beispielsweise durch Vergleich der Bewegungsgleichung und der Adaptionsgleichung für die Drehzahl errechnen. Allerdings liefert auch dieser Vergleich im Bereich generatorisch kleiner Drehzahl keinen zuverlässigen Lastmomentschätzwert (denn er verwendet die Adaptionsgleichung für die Drehzahl).

Deshalb wird angenommen, daß sich das Lastmoment im Bereich generatorisch kleiner Drehzahl nicht mehr ändert. Bei Eintritt in diesen Bereich berechnet man das aktuelle Lastmoment $\hat{M}_{L}$ (0) zu diesem Zeitpunkt (t=0) einmalig. Dieser Wert wird festgehalten, solange sich der Antrieb im Bereich generatorisch kleiner Drehzahl befindet. Die Berechnung eines Drehzahlschätzwertes $\hat{\omega}_{m}$ erfolgt mit Hilfe der Bewegungsgleichung unter Annahme eines konstanten Lastmomentes:

$$\hat{\omega}_{\mathrm{m}} = \hat{\omega}_{\mathrm{m}}(0) + \frac{z_{\mathrm{p}}}{\Theta_{\mathrm{M}}} \int_{0}^{t} \left( \hat{M}_{\mathrm{I}} - \hat{M}_{\mathrm{L}}(0) \right) d\tau$$

Das Verfahren funktioniert dann optimal, wenn sich das Lastmoment nicht ändert. Die Anhebung des Blindstromsollwertes $i_{\mu}^{*}$ stellt sicher, daß der Antrieb auch bei einer plötzlichen Änderung des Lastmomentes nicht kippt. Weil der Drehzahlschätzwert und damit auch der Schätzwert des Orientierungswinkels in dieser Betriebsart nur von den Schätzgrößen für Strom und Läuferfluß abhängt und - sieht man von den weiterhin aktiven Beobachterrückkopplungen ab - keine Rückkopplung zu den Stromistwerten mehr besteht, kann man hier auch von frequenzgesteuertem Betrieb sprechen.

Zwischen den verschiedenen Betriebsbereichen (Figur 6) befinden sich Übergangsbereiche. Der Übergang von einem Bereich in den anderen wird mittels Hysterese-Kennlinien gesteuert. Beim Verlassen eines Betriebsbereiches wird erst an der äußeren Grenze des Übergangsbereichs auf den nächsten Betriebsbereich umgeschaltet. Insgesamt sind sechs solcher Übergangsbereiche notwendig, von denen in der Figur 6 die folgenden drei dargestellt sind:

- Übergang motorischer/generatorischer Betrieb (Wirkstrom $i_{W}$>0)
- Übergang kleine/große Drehzahl im generatorischen Betrieb (Wirkstrom $i_{W}$>0)
- Übergang motorischer/generatorischer Betrieb (Drehzahl $\omega_{m}$>0)

Wie bereits erwähnt, hängen die Drehzahlgrenzen -$\omega_{RMAX}$ und -$\omega_{RMIN}$ von der maximal auftretenden Höhe des Lastmomentes $M_{I}$ bzw. Wirkstromes $i_{W}$ ab.

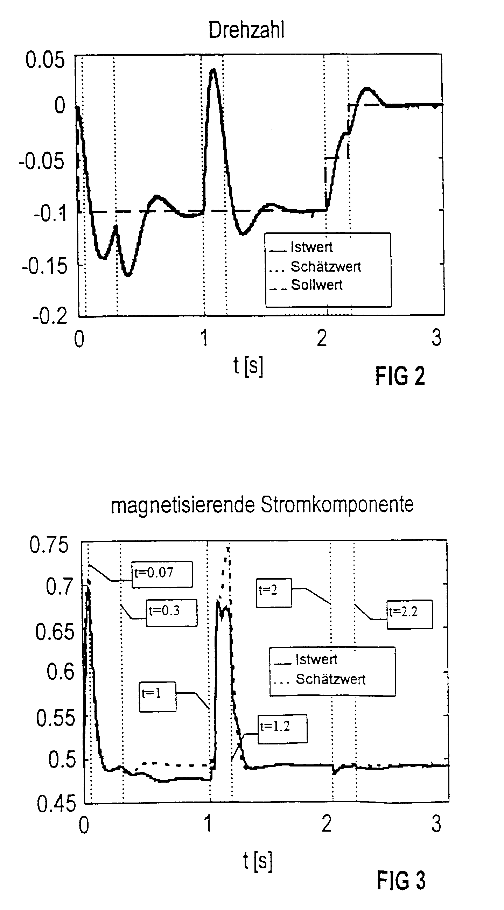

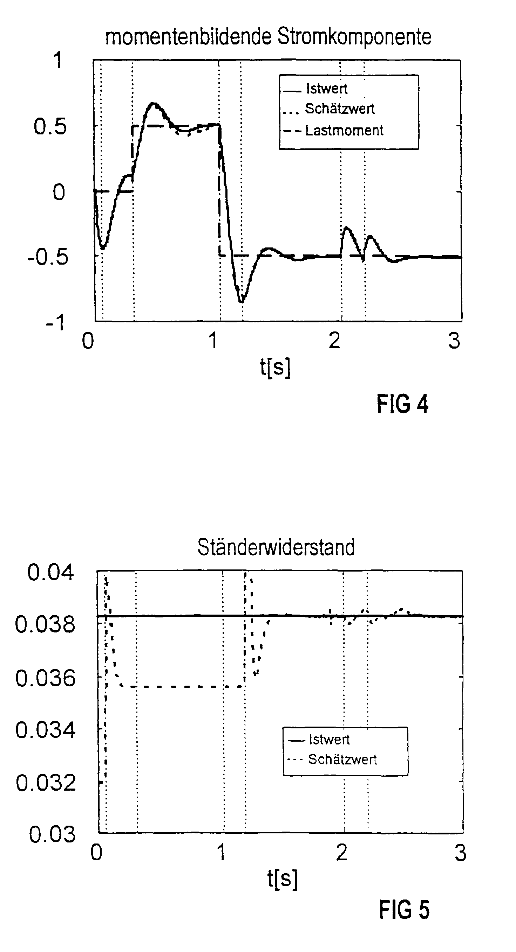

Anhand der Figuren 2 bis 5 ist ein Regelvorgang dargestellt, bei dem alle drei Betriebsbereiche der Asynchronmaschine 4 durchfahren werden. Zum Zeitpunkt t=0 erfolgt ein Drehzahlsollwertsprung auf -10 % (Figur 2), die Maschine ist unbelastet. Da sie sich zu diesem Zeitpunkt im frequenzgesteuerten Betrieb befindet (kleine Drehzahl, keine Informationen über die Last), wird die magnetisierende Stromkomponente sofort angehoben (Figur 3). Bei ca. t=0,07 verläßt die Maschine 4 den frequenzgesteuerten Bereich, die magnetisierende Stromkomponente (Figur 3) wird wieder abgesenkt. Sie befindet sich jetzt kurzzeitig im motorischen Betrieb, deshalb wird die Ständerwiderstandsadaption (Figur 5) aktiviert. Da bei t=0,3 ein Lastmoment von 50 % (Figur 4) auf die Asynchronmaschine 4 geschaltet wird, wechselt sie jetzt in den generatorischen Betrieb bei hoher Drehzahl (Figur 2). Die Widerstandsadaption, die noch keine Zeit hatte, vollständig einzuschwingen, wird abgeschaltet (Figur 5). Bei t=1 reversiert das Lastmoment auf -50 % (Figur 4). Der PI-Drehzahlregler 14 der Regelung 2 der Figur 1 ist relativ langsam eingestellt, deshalb bricht die Drehzahl stark ein (Figur 2) und die Maschine 4 tritt zeitweilig in den frequenzgesteuerten Betrieb ein. Da der aktuelle Schätzwert des Lastmomentes beim Übergang festgehalten wird, ist der Bereichsübergang nur dadurch zu erkennen, daß die magnetisierende Stromkomponente angehoben wird (Figur 3). Bis zum Zeitpunkt t=1,2 hat der Drehzahlregler 14 der Regelung 2 die Asynchronmaschine 4 wieder so weit beschleunigt, daß sie jetzt in den motorischen Betrieb eintritt (Figur 2). Das hat zur Folge, daß die Ständerwiderstandsadaption aktiviert wird und innerhalb von ca. 300 ms gegen den wahren Wert konvergiert (Figur 5). Bei t=2 und t=2,2 folgen zwei Drehzahlsollwertsprünge auf -5 % und 0 % (Figur 2). Der Antrieb bleibt bis zur Enddrehzahl 0 % im motorischen Betrieb (Figur 2).

Durch die erfindungsgemäße Weitergestaltung des MRAS 8 ist auch im generatorischen Betrieb bei hohen Drehzahlen eine Feldorientierung der Asynchronmaschine 4 möglich. Es muß lediglich die Ständerwiderstandsadaption abgeschaltet werden. Mit sinkender Drehzahl ist es ratsam, die Blindstrom-Sollwertkomponente $i_\mu^*$ drehzahlabhängig anzuheben. Erst bei sehr kleiner Drehzahl muß zur Frequenzsteuerung mit Anhebung der magnetisierenden Stromkomponente $i_\mu$ übergegangen werden. Durch die Lastmomentschätzung ist dieser Übergang praktisch transientenfrei. Auch im frequenzgesteuerten Betrieb hat die Regelung mit vollständigem Modell Vorteile. Aufgrund der Beobachterstruktur sind die Reaktionen des Antriebs auf Lastmomentsprünge sehr gut gedämpft.

Durch eine Reihe von Maßnahmen können weitere Verbesserungen erreicht werden:

a) Antrieb mit überwiegend motorischem Betrieb:

Bei vielen Antrieben kann generatorischer Betrieb nur dann auftreten, wenn der Motor abgebremst wird. Da die Absicht zum Bremsen in der Regelung frühzeitig bekannt ist, kann die Ständerwiderstandsadaption auf jeden Fall vor Eintritt in den generatorischen Betrieb gesperrt werden. Eine Verschlechterung des geschätzten Widerstandswertes durch eine möglicherweise zu späte Erkennung des Überganges ist dadurch ausgeschlossen. Unter der Voraussetzung, daß sich der Ständerwiderstand während der (kurzen) Bremsdauer nicht nennenswert ändert, ist so bis Drehzahl Null ein feldorientierter Betrieb möglich.

b) Einsatz eines Temperaturmodells:

Nach einer Umschaltung vom motorischen in den generatorischen Betrieb kann der Schätzwert des Ständerwiderstandes mit einem Temperaturmodell nachgeführt werden. Auf diese Weise ist über längere Zeit ein feldorientierter Betrieb auch bei Drehzahl Null möglich. Eine Umschaltung zur Frequenzsteuerung muß dennoch zeitgesteuert erfolgen, weil die Übereinstimmung zwischen Temperaturmodell und Maschine allmählich schlechter wird.

c) Weicher Übergang zwischen den Bereichen hoher und niedriger Drehzahl:

Um einen sanften Übergang zwischen Feldorientierung und Frequenzsteuerung zu erreichen, sollte die Verstärkung des Integralreglers für den Schätzwert $\omega_m$ schon vor Erreichen der Mindestdrehzahl für feldorientierten Betrieb auf Null geführt werden. Umgekehrt sollte sie nach Überschreiten der Mindestdrehzahl nur allmählich vergrößert werden.

d) Nutzung von Kenntnissen über die Technologie:

Beim Übergang in den frequenzgesteuerten Betrieb wird der Lastmomentschätzwert $\hat{M}_L$ auf seinem letzten Wert festgehalten. Diese Vorgehensweise liefert optimale Ergebnisse, wenn sich die Last während der Frequenzsteuerung nicht ändert. Bei einigen Antrieben (z.B. Strömungsantriebe) ist das Lastmoment jedoch drehzahlabhängig und kann seine Richtung beim Drehzahlnulldurchgang ändern. Eine Berücksichtigung eines solchen Verhaltens mittels einer Lastmomentkennlinie brächte hier eine wesentliche Verbesserung des Regelverhaltens im frequenzgesteuerten Betrieb.

Die Umschaltbedingungen und die Charakteristik der Blindstromanhebung lassen sich vorteilhaft mit Hilfe von hysteresebehafteten Umschaltern und nichtlinearen Kennliniengliedern realisieren. Allerdings sind auch andere Realisierungen denkbar. So kann grundsätzlich jedes nichtlineare Kennlinien - bei entsprechender Wahl der Eingangs- und Ausgangszugehörigkeitsfunktionen, der Fuzzy-Operatoren und Defuzzifizierungsmethode - in ein Fuzzy-Logik-Regelwerk umgewandelt werden. Eine Realisierung der Umschaltbedingungen und der Blindstromcharakteristik durch eine Fuzzy-Logik-Schlußfolgerungseinrichtung ist also ebenfalls möglich.

**Patentansprüche**

**1.** Verfahren zur geberlosen feldorientierten Regelung (2) einer Asynchronmaschine (4), wobei die Schätzwerte ($\hat{\varphi}_S$, $\omega_m$, $R_1$) eines Orientierungswinkels ($\varphi_S$), einer Läuferdrehzahl ($\omega_m$) und eines Ständerwiderstandes ($R_1$), die bei der feldorientierten Regelung (2) benötigt werden, mittels eines als Maschinenmodell verwendeten MRAS (8) geschätzt werden, **dadurch gekennzeichnet,** daß während des generatorischen Betriebes der Asynchronmaschine (4) der aktuelle Schätzwert ($R_1$) des Ständerwiderstandes ($R_1$) bei Eintritt in den generatorischen Betrieb festge-

halten und der Schätzwert ($\hat{\omega}_m$) der Läuferdrehzahl ($\omega_m$) bei hohen Drehzahlen wie im motorischen Betrieb der Asynchronmaschine (4) und bei niedrigen Drehzahlen mittels der mechanischen Bewegungsgleichung mit konstantem geschätztem Lastmoment ($M_L$) berechnet werden.

2. Verfahren nach Anspruch 1, **dadurch gekennzeichnet,** daß im generatorischen Bereich der Asynchronmaschine (4) ausgehend von hohen Drehzahlen mit sinkender Drehzahl ($\omega_m$) der Blindstromsollwert ($i_{\mu 0}^{*}$) drehzahlabhängig angehoben wird.

3. Verfahren nach Anspruch 1, **dadurch gekennzeichnet**, daß die Drehzahlgrenzen ($\omega_{RMAX}$, $\omega_{RMIN}$) im generatorischen Betrieb der Asynchronmaschine (4) zwischen hohen und niedrigen Drehzahl gemäß folgenden Gleichungen:

$$\omega_{R_{MAX}} = \frac{R_2 L_H}{L_2} \frac{i_{W_{MAX}}}{\hat{\Psi}},$$

$$\omega_{R_{MIN}} = \frac{R_2 L_H}{L_2} \frac{i_{W_{MIN}}}{\hat{\Psi}}$$

berechnet werden.

4. Verfahren nach Anspruch 1, **dadurch gekennzeichnet,** daß der Schätzwert ($\hat{M}_L$) des Lastmomentes ($M_L$) bei Eintritt in den generatorischen Betrieb der Asynchronmaschine (4) bei niedriger Drehzahl berechnet wird.

5. Verfahren nach Anspruch 1, **dadurch gekennzeichnet,** daß im generatorischen Betrieb der Asynchronmaschine (4) der festgehaltene aktuelle Schätzwert ($R_1$) des Ständerwiderstandes ($R_1$) mittels eines Temperaturmodells für den Ständerwiderstand ($R_1$) nachgeführt wird.

6. Verfahren nach Anspruch 1, **dadurch gekennzeichnet,** daß der aktuelle Schätzwert ($\hat{R}_1$) des Ständerwiderstandes ($R_1$) mit Auftreten eines Bremsbefehls festgehalten wird.

7. Verfahren nach Anspruch 1, **dadurch gekennzeichnet,** daß der Schätzwert ($\hat{M}_L$) des Lastmomentes ($M_L$) mittels einer Lastmomentkennlinie bestimmt wird.

8. Verfahren nach Anspruch 1, **dadurch gekennzeichnet,** daß die Ablösung zwischen den beiden Berechnungen der Schätzwerte ($\omega_m$) für die Läuferdrehzahl ($\omega_m$) im generatorischen Betrieb der Asynchronmaschine (4) kontinuierlich verläuft.

**Claims**

1. Method for the sensorless field-oriented control (2) of an asynchronous machine (4), with the estimates ($\hat{\varphi}_S$, $\hat{\omega}_m$, $R_1$) of an orientation angle ($\varphi_S$), a rotor speed ($\omega_m$) and a stator resistance ($R_1$), which are required with the field-oriented control (2), being estimated by means of a MRAS (8) used as machine model, characterized in that during the generator operation of the asynchronous machine (4) the current estimate ($R_1$) of the stator resistance ($R_1$) is retained upon entry into the generator operation, and the estimate ($\hat{\omega}_m$) of the rotor speed ($\omega_m$) is calculated at high speeds as in the motor operation of the asynchronous machine (4) and at low speeds by means of the equation of mechanical motion with constant estimated load torque ($M_L$).

2. Method according to claim 1, characterized in that in the generator range of the asynchronous machine (4), proceeding from high speeds with decreasing speed ($\omega_m$), the desired reactive current value ($i_{\mu 0}^{*}$) is increased in a speed-dependent manner.

3. Method according to claim 1, characterized in that the speed limits ($\omega_{RMAX}$, $\omega_{RMIN}$) in the generator operation of the asynchronous machine (4) are calculated between high and low speed according to the following equations:

$$\omega_{R_{MAX}} = \frac{R_2 L_H}{L_2} \frac{^i w_{MAX}}{\hat{\Psi}},$$

$$\omega_{R_{MIN}} = \frac{R_2 L_H}{L_2} \frac{^i w_{MIN}}{\hat{\Psi}}$$

4. Method according to claim 1, characterized in that the estimate $(\hat{M}_L)$ of the load torque $(M_L)$ is calculated upon entry into the generator operation of the asynchronous machine (4) at low speed.

5. Method according to claim 1, characterized in that in the generator operation of the asynchronous machine (4) the retained current estimate $(R_1)$ of the stator resistance $(R_1)$ is readjusted by means of a temperature model for the stator resistance $(R_1)$.

6. Method according to claim 1, characterized in that the current estimate $(\hat{R}_1)$ of the stator resistance $(R_1)$ is retained with the occurrence of a braking command.

7. Method according to claim 1, characterized in that the estimate $(\hat{M}_L)$ of the load torque $(M_L)$ is determined by means of a load torque characteristic.

8. Method according to claim 1, characterized in that the transfer between the two calculations of the estimates $(\hat{\omega}_m)$ for the rotor speed $(\omega_m)$ takes place continuously in the generator operation of the asynchronous machine (4).

**Revendications**

1. Procédé de régulation (2) sans capteurs d'un moteur (4) asynchrone au moyen d'une orientation de champ, dans lequel les valeurs $(\hat{\varphi}_s, \hat{\omega}_m, R_1)$ estimées d'un angle $(\varphi_s)$ d'orientation, d'une vitesse $(\omega_m)$ de rotation d'un rotor et d'une résistance $(R_1)$ d'un stator, qui sont nécessaires pour la régulation au moyen d'une orientation de champ, sont estimées au moyen d'un système modèle adaptatif de référence (8) utilisé en tant que modèle de machine, caractérisé en ce qu'il consiste à maintenir pendant le fonctionnement en générateur du moteur (4) asynchrone la valeur $(R_1)$ estimée instantanée de la résistance (R1) du stator lors de l'entrée en le fonctionnement en générateur et à calculer la valeur $(\hat{\omega}_m)$ estimée de la vitesse $(\omega_m)$ de rotation du rotor à de grandes vitesses de rotation comme en fonctionnement moteur du moteur (4) asynchrone et à des basses vitesses de rotation au moyen de l'équation mécanique du mouvement avec un couple $(M_L)$ de charge estimé constant.

2. Procédé suivant la revendication 1, caractérisé en ce qu'il consiste, dans le domaine en génératrice du moteur (4) asynchrone, à élever en fonction de la vitesse de rotation la valeur $(i^*_{\mu 0})$ de consigne du courant réactif en partant de grandes vitesses de rotation au fur et à mesure que la vitesse de rotation $(\omega_m)$ s'abaisse.

3. Procédé suivant la revendication 1, caractérisé en ce qu'il consiste à calculer les limites $(\omega_{RMAX}, \omega_{RMIN})$ des vitesses de rotation en fonctionnement en génératrice du moteur (4) asynchrone entre une grande vitesse de rotation et une petite vitesse de rotation conformément aux équations suivantes :

$$\omega_{R_{MAX}} = \frac{R_2 L_H}{L_2} \frac{^i w_{MAX}}{\hat{\Psi}},$$

$$\omega_{R_{MIN}} = \frac{R_2 L_H}{L_2} \frac{^i w_{MN}}{\hat{\Psi}}$$

4. Procédé suivant la revendication 1, caractérisé en ce qu'il consiste à calculer la vitesse $(\hat{M}_L)$ estimée du couple $(M_L)$ de charge lors de l'entrée dans le fonctionnement en génératrice du moteur (4) asynchrone à une petite vitesse de rotation.

5. Procédé suivant la revendication 1, caractérisé en ce qu'il consiste à adapter en fonctionnement en génératrice du moteur (4) asynchrone la valeur $(\hat{R}_1)$ estimée instantanée maintenue de la résistance $(R_1)$ du stator au moyen d'un modèle de température pour la résistance $(R_1)$ du stator.

6. Procédé suivant la revendication 1, caractérisé en ce qu'il consiste à maintenir la valeur $(\hat{R}_1)$ estimée instantanée de la résistance $(R_1)$ du stator, lorsque apparaît un ordre de freinage.

7. Procédé suivant la revendication 1, caractérisé en ce qu'il consiste à déterminer la valeur $(\hat{M}_L)$ estimée du couple $(M_L)$ de charge au moyen d'une caractéristique de couple de charge.

8. Procédé suivant la revendication 1, caractérisé en ce qu'il consiste à effectuer en continu la résolution entre les deux calculs des valeurs $(\hat{\omega}_m)$ estimée pour la vitesse $(\omega_m)$ de rotation du rotor en fonctionnement en génératrice du moteur (4) asynchrone.

FIG 1

## Drehzahl

FIG 2

## magnetisierende Stromkomponente

FIG 3

momentenbildende Stromkomponente

FIG 4

Ständerwiderstand

FIG 5

FIG 6

$\omega_m = -\omega_R (\Psi = \text{konst.})$

$i_W$

$i_{W\ MAX}$

generatorischer Bereich

motorischer Bereich

große Drehzahl

kleine Drehzahl

$\omega_m = -\omega_{R\ MIN}$

$W_m$

$\omega_m = -\omega_{R\ MAX}$

kleine Drehzahl

große Drehzahl

motorischer Bereich

generatorischer Bereich

$i_{W\ MIN}$

EP 0 836 765 B1